# EUROPÄISCHE PATENTANMELDUNG

(11) **EP 1 245 942 A2**
(43) Veröffentlichungstag der Anmeldung: **02.10.2002**
(21) Anmeldenummer: 02005973.9
(22) Anmeldetag: 15.03.2002
(51) Int. Cl.: G01M 15/00

(54) **Diagnosegerät für Kraftfahrzeuge**

(30) Priorität: 30.03.2001 DE 10116219
(71) Anmelder: ROBERT BOSCH GMBH, 70442 Stuttgart (DE)
(72) Erfinder: Egle, Karl, 73230 Kirchheim/Teck (DE)

(57) **Zusammenfassung**

Es wird ein Diagnosegerät (10) für Kraftfahrzeuge vorgeschlagen, das mit einem im Kraftfahrzeug angeordneten Diagnosestecker (12) verbindbar ist. Das Diagnosegerät (10) enthält eine Signalaufbereitung (21), die ein Ausgangssignal (22, 25) an einem Signalausgang (26) bereitstellt, das einem Eingangssignal (29) eines anderen Diagnosegeräts (27) entspricht. Das erfindungsgemäße Diagnosegerät (10) erschließt dem anderen Diagnosegerät (27) wenigstens ein in den Diagnosedaten (11) am Diagnosestecker (12) enthaltenen Messwert zur weiteren Verwendung.

## Beschreibung

### Stand der Technik

Die Erfindung geht aus von einem Diagnosegerät für Kraftfahrzeuge nach der Gattung des unabhängigen Anspruchs.

Aus der Firmenschrift der Robert Bosch GmbH "Pocket-System-Tester KTS 300", IA 4/VPT WAW 4566 D - 588 - 30 g, 1998 ist ein Diagnosegerät für Kraftfahrzeuge bekannt geworden, das mit einem im Kraftfahrzeug angeordneten Diagnosestecker verbindbar ist. Das Diagnosegerät enthält eine signalverarbeitende Anordnung, die die erfassten Diagnosedaten aufbereitet und auf einer Anzeige wiedergibt.

Aus der DE-A 39 36 988 ist Diagnosesignalkoppler bekannt geworden, der eine Erfassung von Fahrzeugdiagnosedaten und eine Einspeisung von Stimulisignalen in das Kraftfahrzeug über eine in einem Kraftfahrzeug angeordneten Diagnosestecker ermöglicht. Ergänzend enthält der Diagnosesignalkoppler eine Messwerterfassungseinheit sowie eine Stimulieinheit, die unabhängig von dem vorhandenen Diagnosestecker mittels separater Leitungen mit den im Kraftfahrzeug angeordneten Komponenten verbindbar sind. Der vorbekannte Diagnosesignalkoppler enthält eine signalverarbeitende Anordnung, die eine Signalvorverarbeitung vornimmt und ein oder mehrere Ausgangssignale an ein vorhandenes Kraftfahrzeugdiagnosegerät weiterleitet.

Der Erfindung liegt die Aufgabe zugrunde, die Einsatzmöglichkeiten vorhandener Kraftfahrzeugdiagnosegeräte zu erweitern.

Die Aufgabe wird durch die im unabhängigen Anspruch angegebenen Merkmale gelöst.

### Vorteile der Erfindung

Gemäß der Erfindung ist ein Diagnosegerät vorgesehen, das mit einem im Kraftfahrzeug angeordneten gegebenenfalls genormten Diagnosestecker verbindbar ist. Eine signalverarbeitende Anordnung im Diagnosegerät ermittelt aus den erfassten Diagnosedaten zumindest einen Messwert und gibt ihn zur Darstellung auf einem im Diagnosegerät vorhandenen Display weiter. Das erfindungsgemäße Diagnosegerät enthält weiterhin eine Signalaufbereitung, die wenigstens einen von der signalverarbeitenden Anordnung ermittelten Messwert zu wenigstens einem vorgegebenen Ausgangssignal aufbereitet, das einem Eingangssignal eines anderen Diagnosegeräts entspricht. Das andere Diagnosegerät ist an einem Signalausgang des erfindungsgemäßen Diagnosegeräts anschließbar, an den das vorgegebene Ausgangssignal gelegt ist.

Der wesentliche Vorteil des erfindungsgemäßen Diagnosegeräts liegt darin, dass vorhandene ältere Diagnosegeräte weiterhin verwendet werden können. Das erfindungsgemäße Diagnosegerät ist um eine Signalaufbereitung ergänzt, welche die an dem gegebenenfalls genormten Diagnosestecker im Kraftfahrzeug zur Verfügung gestellten Diagnosedaten an seinem Signalausgang derart simuliert, dass das andere Diagnosegerät die Diagnosedaten als sein Eingangssignal erkennt und weiterverarbeiten kann.

Das andere Diagnosegerät ist beispielsweise ein in einer Kraftfahrzeugwerkstatt vorhandener Abgastester, der keine Möglichkeit aufweist, mit dem im Kraftfahrzeug angeordneten Diagnosestecker verbunden werden zu können. Die im erfindungsgemäßen Diagnosegerät vorhandene Signalaufbereitung stellt am Signalausgang beispielsweise ein Drehzahlsignal und/oder eine Öltemperatur aus den über den Diagnosestecker bezogenen Diagnosedaten bereit, die der am Signalausgang des erfindungsgemäßen Diagnosegeräts angeschlossene Abgastester als seine Eingangssignale erkennen kann.

Vorteilhafte Weiterbildungen und Ausgestaltungen des erfindungsgemäßen Diagnosegeräts ergeben sich aus abhängigen Ansprüchen.

Eine erste vorteilhafte Ausgestaltung sieht vor, dass die Signalaufbereitung ein digitales Ausgangssignal bereitstellt, das besonders unempfindlich gegenüber Störungen an das andere Diagnosegerät übertragen werden kann.

Eine besonders vorteilhafte Ausgestaltung sieht vor, dass ein Digital/Analog-Wandler vorgesehen ist, der das Ausgangssignal am Signalausgang als analoges Ausgangssignal bereitstellt. Mit dieser Maßnahme können die am Diagnosestecker zur Verfügung gestellten Diagnosesignale den vorhandenen Diagnosegeräten mit analogen Signaleingängen zur weiteren Analyse erschlossen werden.

Eine vorteilhafte Weiterbildung des erfindungsgemäßen Diagnosegeräts sieht vor, dass die von der Signalaufbereitung bereitgestellten Signale im Rahmen eines Programmierbetriebs beeinflussbar sind. Mit dieser Maßnahme ist es einfach und kostengünstig möglich, das erfindungsgemäße Diagnosegerät an die von den anderen vorhandenen Diagnosegeräten erwarteten Eingangssignale anzupassen.

Weitere vorteilhafte Ausgestaltungen und Weiterbildungen des erfindungsgemäßen Diagnosegeräts ergeben sich aus weiteren abhängigen Ansprüchen und aus der folgenden Beschreibung.

### Zeichnung

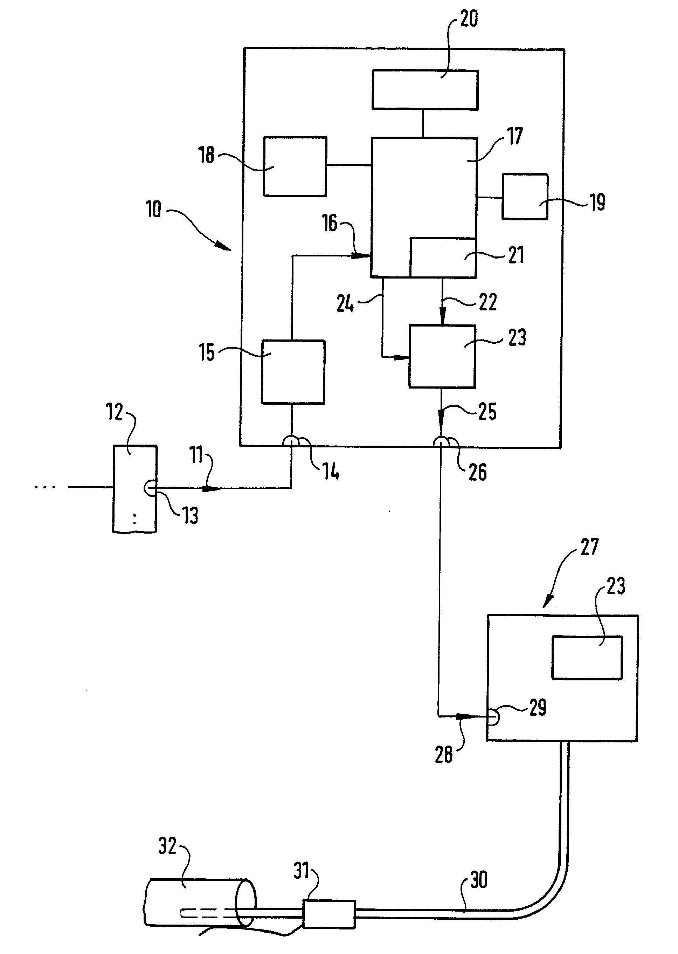

Die Figur zeigt ein erfindungsgemäßes Diagnosegerät, an das ein anderes anschließbar ist.

Die Figur- zeigt ein erfindungsgemäßes Diagnosegerät 10, das zur Erfassung von Diagnosedaten 11 vorgesehen ist, die an einem in einem nicht näher gezeigten Kraftfahrzeug angeordneten, gegebenenfalls genormten Diagnosestecker 12 zur Verfügung stehen. Der Diagnosestecker 12 enthält wenigstens eine erste Steckverbindung 13. Die im Diagnosestecker 12 eingezeichneten Punkte deuten an, dass ggf. weitere Steckverbindungen 13 vorhanden sein können. Die Diagnosedaten 11 gelangen über eine am Diagnosegerät 10 gegebenenfalls vorhandenen zweiten Steckverbindung 14 in eine Signalanpassschaltung 15, die die Diagnosedaten 11 aufbereitet und als aufbereitete Diagnosedaten 16 an eine signalverarbeitende Anordnung 17 abgibt.

Die signalverarbeitende Anordnung 17 arbeitet zusammen mit einem Speicher 18, einer Eingabevorrichtung 19 sowie mit einem Display 20.

Eine Signalaufbereitung 21 gibt ein internes Ausgangssignal 22 an einen Digital/Analog-Wandler 23 ab, der von der signalverarbeitenden Anordnung weiterhin ein Steuersignal 24 zugeführt erhält. Der Digital/Analog-Wandler 23'stellt ein Ausgangssignal 25 an einem Signalausgang 26 bereit.

Am Signalausgang 26 ist ein anderes Diagnosegerät 27 angeschlossen. Das Ausgangssignal 25 ist als Eingangssignal 28 einem Signaleingang 29 des anderen Diagnosegeräts 27 zugeführt. Weiterhin ist dem anderen Diagnosegerät 27 ein abgasführender Schlauch 30 zugeleitet, der zu einem Abgasadapter 31 führt, der an einem Auspuff 32 des nicht näher gezeigten Kraftfahrzeugs adaptiert ist. Das andere Diagnosegerät 27 enthält ein Display 33 zur Darstellung des im anderen Diagnosegerät 27 ermittelten Diagnoseergebnisses.

Das erfindungsgemäße Diagnosegerät arbeitet folgendermaßen:

Das erfindungsgemäße Diagnosegerät 10 ist vorgesehen zur Durchführung einer sogenannten on-board-Diagnose auf der Grundlage der am Diagnosestecker 12 eines Kraftfahrzeugs bereitgestellten Diagnosedaten 11. Die Diagnosedaten 11 werden beispielsweise im Rahmen der Norm DIN/ISO 9141 bereitgestellt. Diese Norm sieht die Übertragung von digitalen Diagnosedaten vor.

Das Diagnosegerät 10 wird mit der ersten Steckverbindung 13 im Diagnosestecker 12 kontaktiert. Die Diagnosedaten 11 gelangen über die ggf. vorgesehene zweite Steckverbindung 14 zur Signalanpassschaltung 15, die die Diagnosedaten 11 umsetzt in die aufbereiteten Diagnosedaten 16. Die Signalanpassschaltung 15 enthält beispielsweise Impedanzwandler und/oder Signalpegelumsetzer. Aus den aufbereiteten Diagnosedaten 16 wird in der signalverarbeitenden Anordnung 17 wenigstens ein Messwert ermittelt, der von dem im Diagnosegerät 10 enthaltenen Display 20 zur Anzeige gebracht wird.

Ein Diagnosevorgang am Diagnosegerät 10 kann über die Eingabevorrichtung 19, beispielsweise eine Tastatur, ausgewählt werden. Die signalverarbeitende Anordnung 17 führt die über die Eingabevorrichtung 19 vorgegebene Diagnose auf der Grundlage wenigstens eines aus den Diagnosedaten 11 ermittelten Messwerts durch anhand eines Programms durch, das beispielsweise im Speicher 18 enthalten ist. Der Speicher 18 enthält elektrisch beschreib- und löschbare Speicher, sowie RAM-Speicher zur kurzfristigen Signalspeicherung. In einer nicht näher gezeigten Ausgestaltung kann das Programm auch über eine nicht näher gezeigte drahtlose Verbindung von einer zentralen Station in das Diagnosegerät 10 übertragen werden. Die signalverarbeitende Anordnung 17 führt die erforderlichen Berechnungen durch und gibt das Diagnoseergebnis auf dem Display 20 aus.

Das Diagnosegerät 10 ist ein eigenständiges Diagnosegerät, wie es beispielsweise im eingangs genannten Stand der Technik angegeben ist. Das Diagnosegerät 10 bietet üblicherweise umfangreiche Diagnosemöglichkeiten auf der Grundlage der am Diagnosestecker 12 zu Verfügung gestellten Diagnosedaten 11. Die mit -dem Diagnosegerät 10 arbeitenden Servicestellen verfügen im Allgemeinen über einen größeren Gerätepark, der zum Teil ältere andere Diagnosegeräte 27 umfassen kann. Im gezeigten Ausführungsbeispiel soll das andere Diagnosegerät 27 ein Abgastester sein, der über den Abgasschlauch 30 und den Abgasadapter 31 mit dem Auspuff 32 verbindbar ist. Ein Abgastest kann über den Diagnosestecker 12 nicht erfolgen. Der Abgastester 27 enthält zumindest einen Signaleingang 29, dem ein Drehzahlsignal der Brennkraftmaschine des Kraftfahrzeugs zugeführt wird. Der Abgastester 27 analysiert die Abgasbestandteile und gibt auf seinem Display 33 beispielsweise den Kohlenmonoxidgehalt oder den Stickoxidgehalt des Abgases an. Die gesetzlich vorgeschriebenen Abgasprüfungen müssen bei unterschiedlichen Drehzahlen der Brennkraftmaschine durchgeführt werden. Neben der seit langer Zeit üblichen Abgasmessung bei Leerlaufdrehzahl der Brennkraftmaschine schreibt die Abgasuntersuchung ASU II eine Messung des Abgases bei unterschiedlichen Motorlasten, entsprechend unterschiedlichen Drehzahlen vor.

Der Signaleingang 29 ist mit beispielsweise einer Triggerzange verbindbar, die das erforderliche Drehzahlsignal an sich aus der Zündanlage einer fremdgezündeten Brennkraftmaschine ableitet. Bei Dieselbrennkraftmaschinen ist der Signaleingang 29 an sich beispielsweise mit einem optoelektronischen Drehzahlgeber zu verbinden. Bedingt durch den technischen Fortschritt wird eine Adaption der entsprechenden Geber zur Erfassung der Drehzahl an Brennkraftmaschinen oder allgemein Kraftfahrzeug-Antriebsmotoren immer schwieriger.

Erfindungsgemäß ist deshalb vorgesehen, dass das Diagnosegerät 10 die Signalaufbereitung 21 enthält, die dem anderen Diagnosegerät 27 ermöglicht, den im Rahmen der Diagnosedaten 11 am Diagnosestecker 12 zur Verfügung gestellten Drehzahlmesswert nutzen zu können. Die Signalaufbereitung 21 ist vorzugsweise in der signalverarbeitenden Anordnung 17 enthalten. Die Signalumformung 21 stellt den in der signalverarbeitenden Anordnung 17 beispielsweise ermittelten Drehzahlmesswert im Rahmen einer elektrischen Kenngröße dar, die vom Signaleingang 29 des anderen Diagnosegeräts 27 verarbeitbar ist.

Das von der Signalumformung 21 abgegebene interne Ausgangssignal 22 kann beispielsweise ein digitales Signal sein, das im Digital/Analog-Wandler 23 in ein Stromsignal umgesetzt wird. Das Stromsignal steht beispielsweise an einem nicht näher gezeigten Drahtbügel außen am Diagnosegerät 10 zur Verfügung, an dem die Triggerzange anklemmbar ist. Eine andere Möglichkeit ist die Umsetzung des internen Ausgangssignals 22 in ein analoges Spannungssignal, das am Signalausgang 26 als Ausgangssignal 25 zur Verfügung steht. In einer einfachen Ausgestaltung kann das interne, im Allgemeinen digitale Ausgangssignal 22 unmittelbar an den Signalausgang 26 geführt und somit identisch mit dem Ausgangssignal 25 sein.

Das Ausgangssignal 25 kann bei der beschriebenen Ausgestaltung des anderen Diagnosegerätes 27 als Abgastester neben einem Drehzahlsignal insbesondere ein am Diagnosestecker 12 zur Verfügung gestelltes Öltemperatursignal sein, das ebenfalls dem Abgastester 27 über einen weiteren Signaleingang 29 als weiteres Eingangssignal 28 zugeführt wird.

Gemäß einer vorteilhaften Weiterbildung des erfindungsgemäßen Diagnosegeräts 10 ist vorgesehen, dass das interne Ausgangssignal 22 und/oder das Ausgangssignal 25 im Rahmen eines Programmierbetriebs festlegbar ist. Die Programmierung erfolgt zweckmäßigerweise über die ohnehin vorhandene Eingabevorrichtung 19. Im Speicher 18 können mehrere Möglichkeiten zur Auswahl hinterlegt sein. Beispielsweise kann die Bedeutung der einzelnen Bits in einem Bitstrom des internen Ausgangssignals 22 festgelegt werden. Eine andere Möglichkeit sieht die Beeinflussung des Digital/Analog-Wandlers 23 über das Steuersignal 24 vor, wobei insbesondere die Dynamik des Ausgangssignals 25 in Abhängigkeit vom internen Ausgangssignal 22 festgelegt werden kann. Diese Maßnahme ermöglicht eine Anpassung an die unterschiedlichsten anderen Diagnosegeräte 27 ohne Änderungen der Hardware des erfindungsgemäßen Diagnosegeräts 10.

## Patentansprüche

1. Diagnosegerät (10) für Kraftfahrzeuge, das mit einem in einem Kraftfahrzeug angeordneten Diagnosestecker (12) verbindbar ist, mit einer signalverarbeitenden Anordnung (17), die aus Diagnosedaten (11) zumindest einen Messwerte ermittelt und zur Darstellung an ein vorhandenes Display (20) weitergibt, **dadurch gekennzeichnet, dass** das Diagnosegerät (10) eine Signalaufbereitung (21) enthält, die zumindest einen von der signalverarbeitenden Anordnung (17) ermittelten Messwert zu wenigstens einem Ausgangssignal (22, 25) aufbereitet, das einem Eingangssignal (28) eines anderen Diagnosegeräts (27) entspricht, und dass das Ausgangssignal (22, 25) an einen Signalausgang (26) gelegt ist, an dem das andere Diagnosegerät (26) anschließbar ist.

2. Diagnosegerät (10) nach Anspruch 1, **dadurch gekennzeichnet, dass** die Signalaufbereitung (21) ein digitales Ausgangssignal (22, 25) bereitstellt.

3. Diagnosegerät (10) nach Anspruch 1, **dadurch gekennzeichnet, dass** wenigstens ein Digital/Analog-Wandler (23) vorgesehen ist, der ein analoges Ausgangssignal (25) bereitstellt.

4. Diagnosegerät (10) nach einem der vorhergehenden Ansprüche, **dadurch gekennzeichnet, dass** das Ausgangssignal (22, 25) ein Maß für die Drehzahl eines Kraftfahrzeug-Antriebsmotors ist.

5. Diagnosegerät (10) nach einem der vorhergehenden Ansprüche, **dadurch gekennzeichnet, dass** das Ausgangssignal (22, 25) ein Maß für eine Öltemperatur eines Kraftfahrzeug-Antriebsmotors ist.

6. Diagnosegerät (10) nach einem der vorhergehenden Ansprüche, **dadurch gekennzeichnet, dass** das von der Signalaufbereitung (21) bereitgestellte Ausgangssignal (22, 25) im Rahmen eines Programmierbetriebs des Diagnosegeräts (10) beeinflussbar ist.

7. Diagnosegerät (10) nach einem der vorhergehenden Ansprüche, **dadurch gekennzeichnet, dass** das andere Diagnosegerät (27) ein Abgastester ist, dem ein von der Signalaufbereitung (21) bereitgestelltes Drehzahlsignal und/oder ein Öltemperatursignal als Eingangssignal (28) zugeleitet ist.
